# FASCICULE DE BREVET EUROPEEN

(11) **EP 1 356 303 B1**
(45) Date de publication et mention de la délivrance du brevet: **15.09.2004**
(21) Numéro de dépôt: 02700414.2
(22) Date de dépôt: 25.01.2002
(51) Int. Cl.: G01N 35/00

(54) **PROCEDE ET SYSTEME PERMETTANT DE REALISER EN FLUX CONTINU UN PROTOCOLE BIOLOGIQUE, CHIMIQUE OU BIOCHIMIQUE.**
VERFAHREN UND VORRICHTUNG ZUR KONTINUERLICHEN DURCHFÜHRUNG EINER BIOLOGISCHEN, CHEMISCHEN ODER BIOCHEMISCHEN REAKTION
METHOD AND SYSTEM FOR PERFORMING IN CONTINUOUS FLOW A BIOLOGICAL, CHEMICAL OR BIOCHEMICAL PROTOCOL

(30) Priorité: 29.01.2001 FR 0101159
(43) Date de publication de la demande: 29.10.2003
(73) Titulaire: COMMISSARIAT A L'ENERGIE ATOMIQUE, 75752 Paris Cédex 15 (FR)
(72) Inventeur: FOUILLET, Yves, F-38340 VOREPPE (FR); CHARLES, Raymond, F-38430 SAINT-JEAN de MOIRANS (FR); SARRUT, Nicolas, F-38170 SEYSSINET PARISET (FR); CLAUSTRE, Patricia, F-38430 MOIRANS (FR)
(74) Mandataire: Poulin, Gérard
(86) Numéro de dépôt international: PCT/FR2002/000309
(87) Numéro de publication internationale: WO 2002/061438

(56) Documents cités:
- WO-A-01/51207
- WO-A-95/34374
- WO-A-99/11373
- WO-A-99/34920
- US-A- 3 368 872
- US-A- 3 566 677
- US-A- 4 349 510
- US-A- 4 883 642
- US-A- 5 508 200

## Description

### DOMAINE TECHNIQUE

L'invention concerne un procédé et un système permettant de réaliser en flux continu un protocole biologique, chimique ou biochimique. Elle permet de réaliser un protocole complet d'analyse sur un grand nombre d'échantillons.

### ETAT DE LA TECHNIQUE ANTERIEURE

Pour des études biologiques, il est nécessaire de réaliser des réactions chimiques, biochimiques ou biologiques suivant un protocole bien déterminé. Ces réactions font très souvent intervenir des étapes de mélanges, des étapes de traitement thermique, des étapes d'incubation, des étapes de détections.

Par exemple, le système peut être utilisé pour la synthèse de produits chimiques fins, c'est-à-dire ceux fabriqués en petits volumes et/ou avec une très haute qualité, où des séries d'étapes impliquant un traitement de réactifs et/ou l'injection de réactifs sont requises. Le système peut aussi être utilisé pour le dépistage de drogues, par exemple lorsqu'une drogue est liée à une protéine cible, ou pour les analyses biologiques comme la détection d'une interaction protéine-protéine ou la détection d'un composant protéiné dans un échantillon biologique complexe.

A titre d'exemple de réaction chimique ou biologique, dans le domaine de la génétique, on utilise très largement le procédé de réaction de polymérisation en chaîne ou PCR (de l'anglais "Polymerisation Chain Reaction"). Une étape de PCR nécessite le mélange d'un échantillon d'ADN avec des réactifs nécessaires à l'amplification. Il faut ensuite faire cycler en température les volumes de réactions entre des températures pouvant être comprises entre 50°C et 94°C.

Pour rentabiliser les installations des laboratoires, il est nécessaire de concevoir des machines optimisant les points suivants :
- minimiser les volumes d'échantillons et de réactifs pour minimiser le coût de mise en oeuvre des réactions,
- mettre en série plusieurs réactions dans un même système, l'idéal étant de réaliser tout un protocole biologique sur une même machine,
- mettre en parallèle un grand nombre d'analyses, ce qui permet d'accroître la capacité des laboratoires (en nombre d'analyses réalisées par jour et par machine).

Il existe actuellement deux grandes familles de machines permettant de réaliser un protocole complet d'analyse chimique ou biologique d'un grand nombre d'échantillons. Une première famille est constituée par les systèmes où les liquides sont déposés dans des puits. Une deuxième famille est constituée par des micro-systèmes où les fluides sont véhiculés dans des microcanaux. On utilise aussi les termes µTAS pour "Total Analysis System" ou µFIA pour "Flow Injection Analysis".

Concernant la première famille de machine, l'échantillon biologique est placé dans un réservoir réalisé dans une plaque et ayant la forme d'un puits qui est porté successivement aux températures désirées pour effectuer les traitements thermiques nécessaires aux réactions biologiques. Les appareils commerciaux tels que ceux produits par la société M.J. Research ou par la société Perkin Elmer utilisent généralement un système de thermostatisation par effet Peltier. Cette méthode est simple à mettre en oeuvre et les composants sont standardisés dans le cas de plaques de titration comportant 384 puits répartis selon une matrice de 16 lignes et 24 colonnes.

Chaque opération du protocole biologique (remplissage, PCR, ajout d'un réactif.) se fait en général sur des machines différentes. Suivant le nombre d'analyses à réaliser, la gestion des échantillons, des réactifs et des plaques peut devenir très compliquée. Ce genre de machine ne permet pas de travailler en flux continu de réactions, les machines ne permettant généralement de ne traiter qu'une seule plaque à la fois.

Concernant la deuxième famille de machines, qui est plus récente que la première famille, des microcanaux permettent de véhiculer les liquides nécessaires aux réactions. Les avantages de cette deuxième famille sont nombreux. On peut citer :
- la miniaturisation des volumes des réactifs et des échantillons,
- l'intégration de plusieurs réactions sur le même composant, ce qui permet à l'ensemble d'un protocole biologique d'être effectué sur une même biopuce et ce qui minimise ou facilite l'automatisation des opérations de manipulation,
- la réalisation de protocoles en parallèle sur plusieurs canaux.

Les canaux peuvent être obtenus par gravure dans des substrats en silicium, en verre ou un matériau polymère. Les liquides en réaction circulent en traversant des zones à température contrôlée. On peut se référer à ce sujet à l'article "Continuous Flow PCR on a Chip" de M.U. KOPP et al., Proceedings of the µTAS' 98 Workshop, Banff, Canada, 13-16 octobre 1998, Ed. Kluwer Academic Publishers, pages 7 à 10.

Il existe aussi des systèmes où plusieurs échantillons circulent en même temps sur les mêmes canaux. On parle alors de flux continu de réactions. On peut se référer à ce sujet à l'article "Synthesis and Analysis of Chemical Components in Nanoscale" de E. LITBORN et al., Proceedings of the µTAS'2000 symposium, pages 447 à 454, et à la demande internationale WO-A-00/21 666.

Malheureusement, la mise au point de ces composants reste difficile, principalement en raison du problème du contrôle du transport des liquides dans les canaux. La mise en mouvement des liquides nécessite des méthodes de pompage intégré comme l'électro-osmose ou des systèmes de distribution par pression ou par débits imposés qui restent difficiles à mettre au point et sont souvent d'un prix de fabrication très élevé. La fonction de pompage, pour véhiculer les liquides dans des canaux où sont effectuées les réactions du protocole, est cependant un point clef et incontournable de tous les composants dits "lab on a chip".

Le brevet américain N° 5 736 106 divulgue un dispositif permettant de réaliser un protocole de traitement thermique sur une substance. Le dispositif comprend une plaque conductrice de la chaleur possédant des cavités servant de chambres de réaction et contenant une substance à analyser. Les chambres de réaction sont obturées par une feuille transparente. Un mécanisme de tapis roulants permet d'amener la plaque à cavités à des positions fixes successives pour porter le contenu des cavités à des températures déterminées.

US 5 508 200, WO 9934920 et WO 9534374 décrivent des systèmes permettant de réaliser des protocoles en flux continu selon le préambule de la revendication 1.

### EXPOSÉ DE L'INVENTION

L'invention permet de cumuler les avantages présentés par les techniques de l'état de l'art tout en minimisant les inconvénients. Elle permet de travailler en flux continu d'analyse sur une même machine afin d'augmenter la rentabilité des laboratoires. Elle permet de réaliser toutes les étapes d'un protocole biologique sur une même machine en intégrant l'injection de réactifs ou d'échantillons, le mélange de réactifs, la détection d'analytes, des traitements optiques ou thermiques ou en mettant en oeuvre des fonctions telles que le cyclage en température, les mélanges de réactifs et éventuellement la détection. Elle ne nécessite pas la mise au point de systèmes complexes de pompage de liquide dans des microcanaux.

L'invention met en oeuvre un support d'analyse qui se déplace de manière continue ou à un petit pas. Contrairement au brevet américain N° 5 736 106, cité plus haut, les étapes du protocole peuvent se faire simultanément sur un grand nombre d'échantillons, ce qui permet de réaliser en continu les protocoles biologiques.

Un premier objet de l'invention consiste en un système selon l'une des revendications 1 à 17 permettant de réaliser en flux continu un protocole biologique, chimique ou biochimique sur des substances à analyser.

Ledit système peut comprendre en outre des moyens permettant d'apporter successivement les substances à analyser et les réactifs jusqu'aux moyens de réception du support d'analyse mobile. Il peut aussi comprendre en outre des moyens de détection appliqués aux substances ayant subi le protocole pour fournir une analyse de ces substances.

Les moyens permettant la mise en oeuvre des étapes du protocole peuvent aussi comprendre des moyens pour injecter un réactif ou un échantillon, des moyens de traitement optique (par exemple un traitement ultra-violet) d'un réactif ou d'un échantillon, des moyens d'application d'un champ magnétique, des moyens d'aspiration pour enlever tout ou partie d'un volume de réaction, des moyens de détection, par exemple pour détecter un paramètre d'un constituant d'un échantillon ou de tout marqueur détectable.

Les moyens de chauffage peuvent comprendre au moins un barreau thermique porté à une desdites températures déterminées. Le barreau thermique peut être porté à ladite température déterminée par la circulation d'un fluide caloporteur et/ou par effet Joule et/ou par effet Peltier et/ou par un rayonnement lumineux. Le système peut comprendre en outre des moyens pour rapprocher le support d'analyse mobile du barreau thermique.

Selon un exemple de réalisation, les moyens permettant d'apporter les substances à analyser et les réactifs, et les moyens permettant la mise en oeuvre du protocole sont agencés de façon à obtenir successivement :
- l'apport d'un premier composé chimique dans un volume de réaction jusqu'au moyen de réception,
- le déplacement du support d'analyse mobile vers un premier élément d'injection,
- l'apport d'un deuxième composé chimique dans le volume de réaction par le premier élément d'injection,
- et optionnellement, le déplacement du support d'analyse mobile vers un deuxième élément d'injection pour apporter un troisième composé chimique au volume de réaction.

Les moyens de détection peuvent être des moyens fournissant une analyse des substances directement sur le support d'analyse mobile ou des moyens fournissant une analyse des substances après leur transfert du support d'analyse mobile.

Selon une variante de réalisation, le support d'analyse mobile est constitué par une plaque, les moyens de réception étant constitués par des plots disposés sur une face de la plaque et permettant l'accrochage des substances à analyser.

Selon une autre variante de réalisation, le support d'analyse mobile est un film. Les moyens de réception peuvent résulter de forces de capillarité entre une surface du film et les substances à analyser. Le film peut être mobile entre un rouleau dérouleur et un rouleau enrouleur. Si le film est un film uniforme, la surface du film peut être une surface hydrophile. Le film peut être un film structuré, la structuration du film permettant de déterminer l'emplacement des moyens de réception. Par exemple, la surface du film peut être hydrophobe et supporter des plots hydrophiles constituant lesdits moyens de réception. Le film peut posséder une conductivité thermique anisotrope, la conductivité thermique selon l'épaisseur du film étant supérieure à la conductivité thermique dans le plan du film.

Un deuxième objet de l'invention consiste en un procédé de réalisation, en flux continu, d'un protocole biologique, chimique ou biochimique sur des substances à analyser selon l'une des revendications 18 à 23.

Avantageusement, les substances à analyser et les réactifs sont apportés successivement jusqu'aux moyens de réception du support pendant son défilement.

Le procédé peut comprendre en outre une analyse, par des moyens de détection, des substances ayant subi le protocole.

Selon un mode de mise en oeuvre particulier, le procédé se déroule de façon à obtenir successivement :
- l'apport d'un premier composé chimique dans un volume de réaction jusqu'au moyen de réception,
- le déplacement du support d'analyse vers un premier élément d'injection,
- l'apport d'un deuxième composé chimique dans le volume de réaction par le premier élément d'injection,
- et optionnellement, le déplacement du support d'analyse mobile vers un deuxième élément d'injection pour apporter un troisième composé chimique au volume de réaction.

L'analyse des substances ayant subi le protocole peut être effectuée directement sur le support d'analyse mobile ou après leur transfert du support d'analyse mobile.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue de dessus d'un système permettant de réaliser en flux continu un protocole biologique, chimique ou biochimique selon l'invention,
- la figure 2 montre, en perspective, un support d'analyse mobile selon l'invention lors du fonctionnement du système ;
- la figure 3 montre, en coupe longitudinale et partiellement, le système selon l'invention où sont visibles trois barreaux thermiques permettant de réaliser des étapes d'un protocole biologique, chimique ou biochimique ;
- la figure 4 illustre un cycle PCR réalisé sur un support d'analyse mobile, conformément à l'invention.

### DESCRIPTION DETAILLEE DE MODES DE REALISATION DE L'INVENTION

Comme indiqué ci-dessus, le système peut aussi être avantageusement utilisé pour toute application impliquant un protocole comprenant des étapes en série. Les moyens permettant la mise en oeuvre d'un protocole peuvent comprendre par exemple des moyens d'injection d'un réactif ou d'un échantillon, des moyens de traitement optique (par exemple un traitement ultra-violet) d'un réactif ou d'un échantillon, des moyens de détection par exemple pour détecter un paramètre d'un constituant d'un échantillon ou de tout marqueur détectable et des moyens de traitement thermique d'un échantillon.

Toute synthèse requérant l'injection en série de réactifs peut en particulier être avantageusement mis en oeuvre selon le procédé et grâce au système de l'invention. A titre d'exemples, les applications de l'invention comprennent la synthèse de produits chimiques, en particulier de produits chimiques fins, c'est-à-dire ceux fabriqués en petits volumes et/ou avec une très haute qualité. En outre, un substrat microfluidique ou un dispositif selon l'invention, mettant en oeuvre plus d'un protocole, peut être conçu, par exemple pour la synthèse de produits chimiques fins en combinaison avec un dépistage en ligne (par exemple le dépistage de drogues).

Dans une application de l'invention, un ou plusieurs réactifs sont disposés sur la surface du support comme il est requis, sous forme d'une gouttelette liquide. D'autres réactifs peuvent être ajoutés par des éléments d'injection positionnés le long du dispositif, ces éléments d'injection injectant la quantité requise de réactifs. Les caractéristiques du dispositif, comportant entre autres le matériau du support d'analyse, sont choisies de façon à être compatibles avec les caractéristiques des réactions envisagées, par exemple les températures des réactions et les solvants (par exemple : eau, solvants organiques) mis en oeuvre dans la synthèse. Dans un autre mode de réalisation, le système selon l'invention peut être utilisé pour un dépistage de drogue dans lequel une protéine ou une composition de cellule est fournie au support sous forme d'une gouttelette, un composé de test est injecté par un élément d'injection positionné le long du système et, optionnellement, une étape de détection ou d'analyse est menée sur l'échantillon, de préférence par des moyens de détection situés sur le système. Dans un autre mode de réalisation, le système peut être utilisé pour un protocole de détection dans lequel un échantillon est fourni au support d'analyse sous forme de gouttelettes et un élément pour mener une étape de détection est positionné dans le système. Par exemple, la néphélométrie par laser peut être utilisée pour détecter des complexes antigène-anticorps pour le dépistage à débit élevé pour déterminer la solubilité dans l'eau d'une drogue. On peut se reporter à ce sujet à l'article de C.D. BEVAN et al., paru dans Anal. Chem., 15 avril 2000, 72(8), pages 1781 à 1787. Dans d'autres applications, les moyens permettant la mise en oeuvre du protocole sont des moyens pour réaliser des traitements ultra-violets. Par exemple, la lumière ultra-violette est connue pour induire une réticulation entre des brins complémentaires d'ADN et entre ADN et protéines. Un échantillon est fourni au support d'analyse sous forme de gouttelette et un élément de traitement aux ultra-violets disposé dans le système est utilisé pour traiter l'échantillon, comme pour une modification de gène ciblée sur la triple hélice (voir l'article de F.X. BARRE et al., paru dans Proc. Natl. Acad. Sci. USA, 28 mars 2000, 97(7), pages 3084 à 3088), pour la réticulation de protéines à l'ADN de noyaux de cellules humaines (voir l'article de S. LEJNINE, paru dans Nucleic Acids Res. 15 septembre 1999, 27(18), pages 3676 à 3684), pour l'inactivation d'éléments pathogènes (voir l'article de M. GHALI et al., paru dans J. Neurovirol, octobre 1998, 4(5), pages 521 à 530). Dans d'autres applications de l'invention, des moyens de mise en oeuvre d'un protocole comprennent une zone dans laquelle s'exerce un champ magnétique, comme pour la séparation de constituants d'un échantillon par association avec des perles magnétiques (par exemple la purification par calibrage pour des applications de séquençage utilisant des particules paramagnétiques, G. FRY et al., Biotechniques, juillet 1992, 13(1), pages 124 à 131). Dans d'autres applications de l'invention, les moyens de mise en oeuvre d'un protocole comprennent des moyens d'extraction aptes à extraire un volume déterminé d'échantillon ou d'une fraction d'échantillon.

Les moyens de mise en oeuvre d'un protocole comprennent des éléments thermiques pour porter un échantillon successivement à des températures déterminées différentes, par exemple pour réaliser une réaction PCR comme cela va être décrit par la suite.

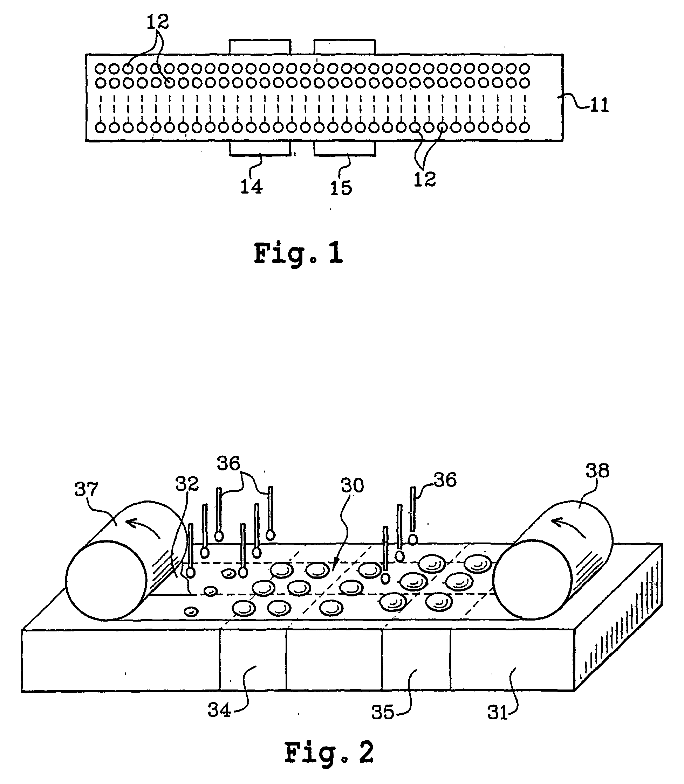

La figure 1 montre un premier support d'analyse mobile 11 disposé dans le système selon l'invention. Le support 11 est un film supportant une matrice de gouttes 12 constituant les différents milieux réactionnels où vont se réaliser les réactions chimiques lorsque des réactifs sont ajoutés. Le support d'analyse est lié à un mécanisme de mise en mouvement, dans la direction de la flèche, afin de permettre le défilement de chaque colonne de gouttes en regard des différents éléments nécessaires à la réalisation du protocole.

Certains protocoles comme la PCR demandent un cyclage en température, typiquement une vingtaine de cycles à 94°C (dénaturation) - 55°C (hybridation) - 72°C (élongation) avec des temps de palier de quelques dizaines de secondes. Ces variations de température sont imposées par des éléments de contrôle de la température tels ceux référencés 14 et 15 sur la figures 1, encore appelés barreaux thermiques et fonctionnant par exemple par effet Peltier ou par circulation d'un fluide caloporteur.

Le fluide caloporteur peut circuler à travers un canal circulaire traversant les barreaux thermiques, ou à travers un système d'ailettes permettant d'optimiser les échanges de chaleur entre le fluide caloporteur et le barreau. Chacun des barreaux thermiques est relié à un bain thermostaté avec un système de pompage pour faire circuler le fluide caloporteur.

Il est possible d'intégrer des éléments de mesure de la température dans les barreaux pour asservir la température du bain thermostaté. Il est aussi possible d'intégrer des éléments chauffant complémentaires dans les barreaux thermostatés. L'élément chauffant est par exemple une résistance électrique travaillant comme une source chaude et le fluide caloporteur comme une source froide. Le chauffage peut être aussi obtenu par rayonnement lumineux.

Pour augmenter les échanges thermiques, il peut être avantageux d'ajouter un système pour presser le support d'analyse sur le barreau chauffant. Ceci est obtenu par exemple, par un système d'aspiration au niveau du barreau chauffant ou par un système de bride, le support d'analyse étant pris en sandwich entre la bride et le barreau chauffant.

Pour éviter l'évaporation des substances à analyser et des réactifs, il est particulièrement avantageux que le tapis ou film soit, avant utilisation, disposé dans une enceinte remplie d'un liquide non miscible avec les produits qui y seront introduits. Ces différents produits peuvent être amenés par de petits capillaires disposés de manière à introduire successivement les produits à injecter lorsque le support d'analyse est en défilement. Les capillaires sont par exemple des fibres en silice fondue couramment utilisées dans les dispositifs micro-fluidiques. Le contrôle de la formation d'une goutte en sortie de fibre est par exemple assuré par un générateur de pression ou par un pousse-seringue.

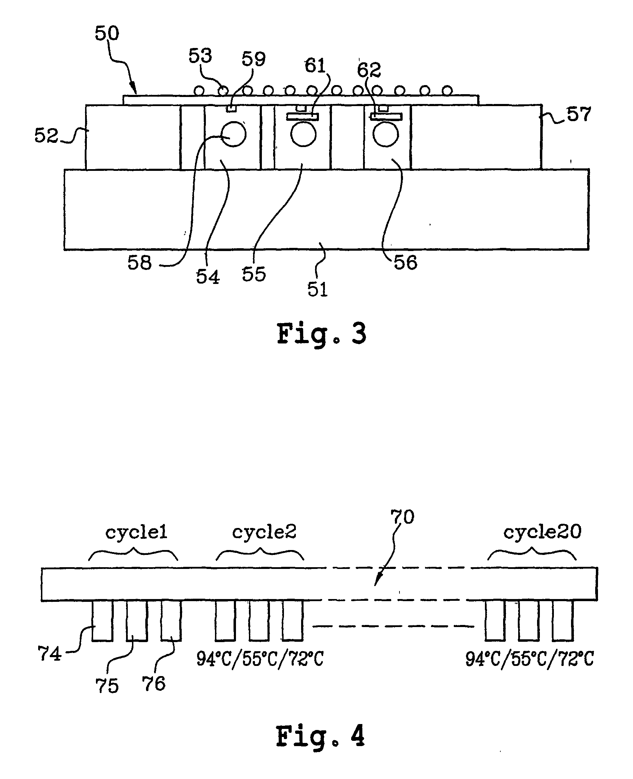

Dans le mode de réalisation représenté à la figure 2, le support d'analyse mobile est un film 30 ou un tapis roulant. Les substances à analyser et les produits de réaction correspondent à des gouttes déposées sur le film 30 en défilement. Sur la figure 2, on reconnaît des capillaires d'injections 36 et des éléments de contrôle de la température 34 et 35 logés dans une platine 31.

L'accrochage des gouttes est assuré par les forces de capillarité existant entre les gouttes et le film 30. Un système de mise en translation du film permet de véhiculer les gouttes le long des différents éléments permettant le déroulement du protocole (dépôts, chauffages, détection). Dans l'exemple représenté à la figure 2, le film 30 est mis en mouvement par un système de bobinage de manière analogue à une cassette de magnétoscope, le film circulant d'un rouleau dérouleur 37 à un rouleau enrouleur 38.

Le film 30 se déroulant est recouvert d'un film d'huile 32 ou d'un liquide non miscible avec les substances à analyser et les réactifs, afin d'éviter leur évaporation. Le liquide non miscible avec les substances à analyser et les réactifs peut être de l'huile (minérale, silicone) ou un solvant organique non miscible à l'eau tel que l'octane.

L'exemple de réalisation illustré par la figure 2 peut bien sûr comporter plusieurs séries de zones chauffantes pour assurer les cycles désirés, par exemple un cycle PCR.

Le film peut être soit uniforme, soit structuré. Dans le cas d'un film uniforme, il est avantageux que ce film soit légèrement hydrophile afin que la goutte déposée ne roule pas pour assurer l'accrochage de la goutte sur le film. Il est possible d'utiliser un film en matériau organique (un plastique ou un polyimide tel que le Kapton®) ou un fil métallique (par exemple en aluminium ou en or).

L'intérêt d'un film structuré est de pouvoir agir sur un auto-positionnement des gouttes. Ceci est par exemple réalisé par un film hydrophobe possédant des plots hydrophiles. Les gouttes se positionnent alors par capillarité sur les plots hydrophiles. Il est aussi possible d'obtenir le même résultat en structurant le film avec des cuvettes.

Pour optimiser les échanges thermiques et minimiser les flux thermiques entre les éléments de contrôle de la température, il est possible d'utiliser des films ayant une conductivité thermique anisotrope, c'est-à-dire isolant thermique dans le plan du film et conducteur thermique suivant son épaisseur.

La partie consommable du système se réduit alors à un film qui a l'avantage d'être plus simple et moins coûteux à réaliser que des structures à puits ou à canaux.

D'autre part, la visibilité des gouttes permet le contrôle en temps réel et la mesure des volumes réactionnels après chaque injection, ce qui peut être avantageux pour la mise au point d'un suivi de production en temps réel.

La figure 3 met en évidence des éléments de contrôle de la température. Un bâti 51 supporte une platine 52 sur laquelle défile un support d'analyse mobile 50. Des volumes de réaction 53, sous la forme de gouttes, sont disposés régulièrement sur le support d'analyse 50. La figure 3 montre trois éléments de contrôle de la température 54, 55 et 56. Ces éléments sont des barreaux thermiques logés dans un matériau isolant 57, leur face supérieure affleurant du matériau isolant. D'autres moyens de chauffage peuvent être utilisés, par exemple ceux basés sur l'effet Joule, l'effet Peltier, l'effet d'un rayonnement lumineux. Les barreaux thermiques 54, 55 et 56 possèdent un trou de passage d'un fluide caloporteur, tel le trou 58. Leur face supérieure présente une cavité d'aspiration, telle la cavité 59 sur le barreau thermique 54, reliée à un dispositif d'aspiration afin de plaquer le support d'analyse 50 sur les barreaux thermiques. Le barreau thermique 55 montre une résistance électrique 61 permettant d'accroître la température de ce barreau. Le barreau thermique 56 montre un élément 62 de mesure de la température de la face supérieure de ce barreau.

La figure 4 représente, de manière schématique, un support d'analyse mobile 70 soumis à un protocole PCR de 20 cycles. Chaque cycle comprend la soumission d'une substance aux trois températures successives 94°C, 55°C et 72°C fournies par vingt groupes de barreaux thermiques 74, 75 et 76.

L'intérêt de l'invention par rapport aux techniques de l'état de l'art peut être démontré à partir d'un protocole pour l'analyse d'une série d'échantillons comportant les étapes suivantes :
- mélange d'un premier réactif à un échantillon,
- cyclage thermique d'une durée t₁,
- ajout d'un deuxième réactif,
- cyclage thermique d'une durée t₂,
- ajout d'un troisième réactif,
- détection d'une substance, d'une couleur ou d'une autre grandeur physico-chimique.

L'invention permet de réaliser ce protocole pour un grand nombre d'échantillons (par exemple 384) combiné avec un grand nombre de réactifs différents (par exemple 100). L'invention permet d'obtenir ces 100 × 384 analyses en un temps plus court que les machines utilisant des plaques à puits traditionnelles tout en ayant un mode de réalisation plus simple que les systèmes "lab on a chip". En effet, avec les machines standard travaillant avec des plaques à 384 puits, le temps de mise en oeuvre du protocole est de 100 × (t₁ + t₂). Ce temps, qui est incompressible, est en général trop long. On peut noter aussi qu'il est nécessaire de concevoir des robots de manipulation des 100 plaques à puits et un système de gestion et de distribution de 100 × 384 échantillons et de 3 × 100 × 384 distributions de réactifs.

Avec une machine utilisant des puces à micro-canaux travaillant en flux continu de réactions, il est possible de dimensionner le système pour minimiser le temps nécessaire pour les 100 × 384 réactions grâce au principe du flux continu. Par exemple, il suffit de réaliser une puce à 384 canaux et de faire circuler les uns à la suite des autres, dans chacun des 384 canaux, les 100 réactions sur les différentes zones où sont effectuées les étapes du protocole. chaque réaction étant séparée l'une de l'autre par des bouchons séparateurs miscibles ou non miscibles (voir le document WO-00/21 666). Le temps nécessaire pour les 100 × 384 réactions est donné par le temps de passage entre deux réactions successives. Ainsi, une très grande vitesse des liquides permettra de faire circuler toutes les réactions en un minimum de temps.

La vitesse de déplacement des liquides V se dimensionne par la relation V = L/t où L est la longueur des zones où sont effectués les protocoles biologiques et t est le temps des protocoles biologiques. Il est donc possible, en prenant des grandes longueurs, d'augmenter la vitesse de déplacement des réactions et donc de minimiser le temps nécessaire pour obtenir les 100 x 384 réactions. Ce constat pose cependant un problème car la nécessité d'augmenter la longueur des canaux est contraire à la miniaturisation de la puce micro-fluidique et remet en cause l'utilisation des microtechnologies pour la réalisation du composant. D'autre part, le contrôle des déplacements sur 384 voies en parallèles avec 100 réactions différentes pose un gros problème de conception et, en particulier, il faut maîtriser parfaitement les problématiques de la mécanique des fluides dans des petits canaux.

L'invention permet de garder l'avantage du flux continu de réactions concernant la rapidité d'exécution des 100 × 384 réactions sans avoir l'inconvénient du contrôle du déplacement des liquides dans des micro-canaux. En effet, l'invention permet de réaliser des réactions biologiques en flux continu, en déplaçant le 'support mobile sur lequel sont immobilisés les volumes de réaction. Le déplacement des volumes de réaction est donc directement contrôlé par le déplacement du support mobile, bien plus simple à réaliser qu'un système de pompage dans des micro-canaux. Il faut noter aussi, comme autre avantage par rapport aux dispositifs à microcanaux, que la vitesse de déplacement du support d'analyse, et par conséquent des échantillons analysés, est indépendante des volumes des échantillons ou des volumes injectés.

On va donner maintenant un exemple d'utilisation du principe de l'invention pour réaliser un protocole de PCR.

Le support d'analyse mobile est un film de Kapton 200 HN disponible chez Dupont, d'épaisseur 50 µm. Le liquide non miscible utilisé est l'huile minérale de type light disponible chez Sigma.

A titre d'exemple d'échantillons, une solution de PCR de 100 µl peut comprendre les constituants suivants :
- 10 µl de tampon 10X (Gibco),
- 4 µl de magnésium Mg2+ (Gibco) 50 mM,
- 10 µl de dNTP (dATP, dCTP, dGTP, dTTP) 2 mM,
- 2 fois 4 µl d'amorces ("primers"),
- 10 µl de BSA 20 mg/ml,
- 58 µl d'eau colorée pour bien visualiser les gouttes,
- 1 µl de matrice (ADN),
- 2 µl de taq polymérase (Gibco).

Des gouttes de cette solution sont déposées sur le tapis ou film, sous huile.

Les gouttes, d'un volume de 0,5 µl, 1 µl et 2 µl, subissent alors une trentaine de cycles thermiques à des températures successives de 94, 55 et 72°C conformément à l'invention. Après récupération des gouttes, les résultats sont analysés par électrophorèse sur gel d'agarose. Les résultats obtenus sont comparés aux résultats fournis par un témoin résultant d'une amplification par PCR d'un volume de 2 µl de la même préparation mais amplifié sur appareil du type plaque à puits standard.

Une variante du protocole précédent consiste à déposer une première goutte de 0,5 µl contenant de l'ADN puis un deuxième dépôt de goutte de 0,5 µl contenant les amorces (ou primers). Les opérations peuvent aussi être parallélisées en réalisant une colonne de N gouttes contenant des ADN différents. On forme ainsi N lignes de gouttes de 0,5 µl puis, séquentiellement, on dépose des gouttes de 0,5 µl de réactifs contenant les primers. Pour chaque colonne les primers sont différents. Il est ainsi possible de réaliser en flux continu des amplifications par PCR sur N ADN différents et pour une multitude de primers différents.

Les différents essais effectués sur l'invention ont permis d'apporter les conclusions suivantes.

La forme des gouttes est reproductible. Chaque goutte, une fois accrochée au film par les forces de capillarité, reste fixée au film avec une très bonne stabilité tout au long du procédé de réalisation du protocole biologique.

Le mélange entre les deux volumes de 0,5 µl est très rapide et il n'est pas nécessaire d'ajouter une fonction supplémentaire pour forcer le mélange, contrairement à l'enseignement du document WO-A-95/34 374. Il a été en effet observé qu'avec de petits volumes (de l'ordre du µl), le mélange s'effectue en quelques secondes.

Les cycles thermiques sont appliqués sur les gouttes avec une précision suffisante pour un protocole de PCR. La présence de l'huile et du film ne perturbe pas les échanges thermiques entre les réactifs et les différents barreaux thermiques.

Le système constitué par le film de Kapton® et l'huile minérale avec la configuration décrite est biocompatible pour une PCR.

Une bulle de gaz peut apparaître après quelques cycles thermiques. Cependant, ceci ne remet pas en cause le résultat. Il n'est donc pas nécessaire d'effectuer des opérations de dégazage des différents liquides avant d'effectuer les cycles de PCR.

## Revendications

1. Système permettant de réaliser en flux continu un protocole biologique, chimique ou biochimique sur des substances à analyser, le système comprenant :
- un support d'analyse mobile (11, 30, 50) comprenant des moyens de réception des substances à analyser et de réactifs, les moyens de réception étant disposés de façon à constituer une matrice de lignes et de colonnes,
- un mécanisme (37, 38) de mise en mouvement continu ou à petit pas lié au support (11, 30, 50) afin de permettre le défilement de chaque colonne desdits moyens de réception en regard des différents éléments nécessaires à la réalisation du protocole,
- des moyens pour recouvrir lesdits moyens de réception d'un film de liquide (32) non miscible avec les substances à analyser et les réactifs et permettant d'éviter l'évaporation des substances à analyser et des réactifs,
**caractérisé en ce que** le système comprend :
- des moyens de chauffage (14, 15, 34, 35, 54, 55, 56) disposés de façon que les moyens de réception du support (11, 30, 50) défilent devant eux lors de la mise en oeuvre du protocole et permettant de porter successivement les moyens de réception à des températures déterminées différentes.

2. Système selon la revendication 1, **caractérisé en ce qu'**il comprend en outre des moyens (36) permettant d'apporter successivement les substances à analyser et les réactifs jusqu'aux moyens de réception du support d'analyse mobile.

3. Système selon l'une des revendications 1 ou 2, **caractérisé en ce qu'**il comprend en outre des moyens de détection appliqués aux substances ayant subi le protocole pour fournir une analyse de ces substances.

4. Système selon la revendication 1, **caractérisé en ce que** lesdits moyens de chauffage comprennent au moins un barreau thermique (54, 55, 56) porté à une desdites températures déterminées.

5. Système selon la revendication 4, **caractérisé en ce que** le barreau thermique est porté à ladite température déterminée par la circulation d'un fluide caloporteur et/ou par effet Joule et/ou par effet Peltier et/ou par un rayonnement lumineux.

6. Système selon l'une des revendications 4 ou 5, **caractérisé en ce qu'**il comprend en outre des moyens (59) pour rapprocher le support d'analyse mobile du barreau thermique.

7. Système selon la revendication 1, **caractérisé en ce que** les différents éléments nécessaires à la réalisation du protocole sont agencés de façon à obtenir successivement :
- l'apport d'un premier composé chimique dans un volume de réaction jusqu'au moyen de réception,
- le déplacement du support, d'analyse mobile vers un premier élément d'injection,
- l'apport d'un deuxième composé chimique dans le volume de réaction par le premier élément d'injection,
- et optionnellement, le déplacement du support d'analyse mobile vers un deuxième élément d'injection pour apporter un troisième composé chimique au volume de réaction.

8. Système selon la revendication 3, **caractérisé en ce que** les moyens de détection sont des moyens fournissant une analyse des substances directement sur le support d'analyse mobile.

9. Système selon la revendication 3, **caractérisé en ce que** les moyens de détection sont des moyens fournissant une analyse des substances après leur transfert du support d'analyse mobile.

10. Système selon la revendication 1, **caractérisé en ce que** le support d'analyse mobile est constitué par une plaque, les moyens de réception étant constitués par des plots disposés sur une face de la plaque et permettant l'accrochage des substances à analyser.

11. Système selon la revendication 1, **caractérisé en ce que** le support d'analyse mobile est un film (30).

12. Système selon la revendication 11, **caractérisé en ce que** les moyens de réception résultent de forces de capillarité entre une surface du film et les substances à analyser.

13. Système selon la revendication 11, **caractérisé en ce que** le film (30) est mobile entre un rouleau dérouleur (37) et un rouleau enrouleur (38).

14. Système selon la revendication 11, **caractérisé en ce que** le film (30) étant un film uniforme, ladite surface du film est une surface hydrophile.

15. Système selon la revendication 11, **caractérisé en ce que** le film est un film structuré, la structuration du film permettant de déterminer l'emplacement des moyens de réception.

16. Système selon la revendication 15, **caractérisé en ce que** ladite surface du film est hydrophobe et supporte des plots hydrophiles constituant lesdits moyens de réception.

17. Système selon la revendication 11, **caractérisé en ce que** le film possède une conductivité thermique anisotrope, la conductivité thermique selon l'épaisseur du film étant supérieure à la conductivité thermique dans le plan du film.

18. Procédé de réalisation, en flux continu, d'un protocole biologique, chimique ou biochimique sur des substances à analyser, le procédé utilisant un système selon l'une quelconque des revendications 1 à 17, le procédé comprenant :
- la mise en défilement du support . d'analyse mobile (11, 30, 50),
- la mise en oeuvre du protocole sur les substances à analyser pendant le défilement du support d'analyse mobile grâce à un apport d'énergie thermique fournis par les moyens de chauffage.

19. Procédé selon la revendication 18, **caractérisé en ce que** les substances à analyser et les réactifs sont apportés successivement jusqu'aux moyens de réception du support pendant son défilement.

20. Procédé selon l'une des revendications 18 ou 19, **caractérisé en ce qu'**il comprend en outre une analyse, par des moyens de détection, des substances ayant subi le protocole.

21. Procédé selon la revendication 19, **caractérisé en ce qu'**il se déroule de façon à obtenir successivement :
- l'apport d'un premier composé chimique dans un volume de réaction jusqu'au moyen de réception,
- le déplacement du support d'analyse mobile vers un premier élément d'injection,
- l'apport d'un deuxième composé chimique dans le volume de réaction par le premier élément d'injection,
- et optionnellement, le déplacement du support d'analyse mobile vers un deuxième élément d'injection pour apporter un troisième composé chimique au volume de réaction.

22. Procédé selon la revendication 20, **caractérisé en ce que** ladite analyse des substances ayant subi le protocole est effectuée directement sur le support d'analyse mobile.

23. Procédé selon la revendication 20, **caractérisé en ce que** ladite analyse des substances ayant subi le protocole est effectuée après leur transfert du support d'analyse mobile.

## Patentansprüche

1. System zur Realisierung eines kontinuierlichen biologischen, chemischen oder biochemischen Protokolls der Analyse von Substanzen, wobei dieses System umfasst:
- einen beweglichen Analyseträger (11, 30, 50) mit Aufnahmeeinrichtungen der zu analysierenden Substanzen und der Reagenzien, wobei diese Aufnahmeeinrichtungen so angeordnet sind, dass sie eine Matrix aus Zeilen und Spalten bilden,
- einen Bewegungsmechanismus (37, 38), der ermöglicht, jede Spalte der genannten Aufnahmeeinrichtungen kontinuierlich oder in kleinen Schritten an den verschiedenen Elementen vorbeizubewegen, die zur Realisierung des Protokolls nötig sind,
- Einrichtungen zur Abdeckung der genannten Aufnahmeeinrichtungen mit einem Flüssigkeitsfilm (32), unmischbar mit den zu analysierenden Substanzen und den Reagenzien und fähig, die Verdampfung der Substanzen und der Reagenzien zu verhindern,
**dadurch gekennzeichnet, dass** das System umfasst:
- Heizeinrichtungen (14, 15, 34, 35, 54, 55, 56), so angeordnet, dass sich die Aufnahmeeinrichtungen des Trägers (11, 30, 50) während der Erstellung des Protokolls an ihnen vorbeibewegen und diese Aufnahmeeinrichtungen dabei sukzessiv auf bestimmte unterschiedliche Temperaturen gebracht werden.

2. System nach Anspruch 1, **dadurch gekennzeichnet, dass** es außerdem Einrichtungen (36) umfasst, die dazu dienen, den Aufnahmeeinrichtungen des beweglichen Analyseträgers die zu analysierenden Substanzen und die Reagenzien zuzuführen.

3. System nach einem der Ansprüche 1 oder 2, **dadurch gekennzeichnet, dass** es außerdem Detektionseinrichtungen umfasst, die auf die dem Protokoll unterzogenen Substanzen angewendet werden, um eine Analyse dieser Substanzen zu liefern.

4. System nach Anspruch 1, **dadurch gekennzeichnet, dass** die genannten Heizeinrichtungen wenigstens einen auf eine der genannten festgelegten Temperaturen gebrachten Thermostab bzw. -block (54, 55, 56) umfassen.

5. System nach Anspruch 4, **dadurch gekennzeichnet, dass** der Thermostab bzw. -block durch die Zirkulation einer Wärmeübertragungsflüssigkeit und/oder durch Joule-Effekt und/oder durch Peltier-Effekt und/oder durch eine Lichtstrahlung auf die genannte festgelegte Temperatur gebracht wird.

6. System nach Anspruch 4 oder 5, **dadurch gekennzeichnet, dass** es außerdem Einrichtungen (59) umfasst, um den beweglichen Analyseträger dem Thermostab bzw. -block anzunähern.

7. System nach Anspruch 1, **dadurch gekennzeichnet, dass** die verschiedenen zur Realisierung des Protokolls nötigen Elemente vorgesehen sind, um sukzessive:
- einem Reaktionsvolumen eine erste chemische Verbindung zuzuführen, bis zu der Aufnahmeeinrichtung,
- den beweglichen Analyseträger bis zu einem ersten Injektionselement zu verschieben,
- dem Reaktionsvolumen durch das erste Injektionselement eine zweite chemische Verbindung zuzuführen,
- und, optional, den beweglichen Analyseträgers zu einem zweiten Injektionselement zu verschieben, um dem Reaktionsvolumen eine dritte chemische Verbindung zuzuführen.

8. System nach Anspruch 3, **dadurch gekennzeichnet, dass** die Detektionseinrichtungen Mittel sind, die eine Analyse der Substanzen direkt auf dem beweglichen Analyseträger liefern.

9. System nach Anspruch 3, **dadurch gekennzeichnet, dass** die Detektionseinrichtungen Mittel sind, die eine Analyse der Substanzen nach ihrem Transfer von dem beweglichen Analyseträger liefern.

10. System nach Anspruch 1, **dadurch gekennzeichnet, dass** der bewegliche Analyseträger durch eine Platte gebildet wird, wobei die Aufnahmeeinrichtungen durch auf einer Seite der Platte vorhandene Stellen gebildet werden, die ein Haften der zu analysierenden Substanzen ermöglichen.

11. System nach Anspruch 1, **dadurch gekennzeichnet, dass** der bewegliche Analyseträger ein Film (30) ist.

12. System nach Anspruch 11, **dadurch gekennzeichnet, dass** die Aufnahmeeinrichtungen aus den Kapillarkräften zwischen einer Oberfläche des Films und den zu analysierenden Substanzen resultieren.

13. System nach Anspruch 11, **dadurch gekennzeichnet, dass** der Film (30) beweglich ist zwischen einer Abwickelrolle (37) und einer Aufwickelrolle (38).

14. System nach Anspruch 11, **dadurch gekennzeichnet, dass** der Film (30) ein gleichmäßiger Film ist, wobei die genannte Oberfläche des Films eine hydrophile Oberfläche ist.

15. System nach Anspruch 11, **dadurch gekennzeichnet, dass** der Film ein strukturierter Film ist, wobei die Strukturierung des Films ermöglicht, die Stelle bzw. Stellen der Aufnahmeeinrichtungen festzulegen.

16. System nach Anspruch 15, **dadurch gekennzeichnet, dass** die genannte Oberfläche des Films hydrophob ist und hydrophile Stellen trägt, welche die Aufnahmeeinrichtungen bilden.

17. System nach Anspruch 11, **dadurch gekennzeichnet, dass** der Film eine anisotrope Wärmeleitfähigkeit besitzt, wobei die Wärmeleitfähigkeit in Richtung Filmdicke höher ist als in Richtung Filmebene.

18. Verfahren zur Realisierung eines kontinuierlichen biologischen, chemischen oder biochemischen Protokolls der Analyse von Substanzen, wobei dieses Verfahren ein System nach einem der Ansprüche 1 bis 17 benutzt und dabei umfasst:
- die kontinuierliche Verschiebung des beweglichen Analyseträgers (11, 30, 50),
- die Durchführung des Protokolls mit den zu analysierenden Substanzen während der Verschiebung des beweglichen Analyseträgers dank einer Zufuhr von durch die Heizeinrichtungen gelieferter Wärmeenergie.

19. Verfahren nach Anspruch 18, **dadurch gekennzeichnet, dass** die zu analysierenden Substanzen und die Reagenzien den Aufnahmeeinrichtungen des Trägers während dessen Verschiebung sukzessive zugeführt werden.

20. Verfahren nach einem der Ansprüche 18 oder 19, **dadurch gekennzeichnet, dass** es außerdem mit Hilfe von Detektionseinrichtungen eine Analyse der dem Protokoll unterzogenen Substanzen umfasst.

21. Verfahren nach Anspruch 19, **dadurch gekennzeichnet, dass** es so abläuft, dass man sukzessive:
- einem Reaktionsvolumen eine erste chemische Verbindung zuführt, bis zu der Aufnahmeeinrichtung,
- den beweglichen Analyseträger bis zu einem ersten Injektionselement verschiebt,
- dem Reaktionsvolumen durch das erste Injektionselement eine zweite chemische Verbindung zuführt,
- und, optional, den beweglichen Analyseträger zu einem zweiten Injektionselement verschiebt, um dem Reaktionsvolumen eine dritte chemische Verbindung zuzuführen.

22. Verfahren nach Anspruch 20, **dadurch gekennzeichnet, dass** die Analyse der dem Protokoll unterzogenen Substanzen direkt auf dem beweglichen Analyseträger durchgeführt wird.

23. System nach Anspruch 20, **dadurch gekennzeichnet, dass** die Durchführung der genannten Analyse der dem Protokoll unterzogenen Substanzen nach ihrem Transfer von dem beweglichen Analyseträger stattfindet.

## Claims

1. System making it possible to perform a biological, chemical or biochemical protocol in continuous flow on substances to be analyzed, the system comprising:
- a mobile analysis support (11, 30, 50) comprising reception means for the substances to be analyzed and reagents, the reception means being arranges so as to form a matrix of rows and columns,
- a mechanism (37, 38) for continuously moving or moving in small steps and linked to the support (11, 30, 50) in order to permit the passage of each column of said reception means in front of the different elements necessary for implementing the protocol,
- means for recovering said reception means with a liquid film (32) not miscible with the substances to be analyzed and the reagents and making it possible to avoid the evaporation of the substances to be analyzed and reagents,
**characterized in that** the system comprises:
- heating means (14, 15, 34, 35, 54, 55, 56) positioned in such a way that the reception means of the support (11, 30, 50) move in front of them during the implementing of the protocol and make it possible to successively raise the reception means to different given temperatures.

2. System according to claim 1, **characterized in that** it also comprises means (36) of delivering the substances to be analyzed and reagents sequentially to the mobile analysis support reception means.

3. System according to either of claims 1 and 2, **characterized in that** it also comprises detection means applied to substances on which the protocol has been performed to provide an analysis of these substances.

4. System according to claim 1, **characterized in that** said heating means comprise at least one thermal rod (54, 55, 56) brought to one of said given temperatures.

5. System according to claim 4, **characterized in that** the thermal rod is brought to said determined temperature by circulation of a heat transporting fluid and/or by Joule effect and/or the Peltier effect and/or light radiation.

6. System according to claim 4 or 5, **characterized in that** it also comprises means (59) of bringing the mobile analysis support close to the thermal rod.

7. System according to claim 1, **characterized in that** the different elements necessary for implementing the protocol are arranged so as to successively obtain:
- the supply of a first chemical compound in a reaction volume to the reception means,
- the displacement of the mobile analysis support to a first injection element,
- the supply of a second chemical compound in the reaction volume by the first injection element, and
- optionally the displacement of the mobile analysis support to a second injection element in order to supply a third chemical compound to the reaction volume.

8. System according to claim 3, **characterized in that** the detection means are means that provide an analysis of substances directly on the mobile analysis support.

9. System according to claim 3, **characterized in that** the detection means are means providing an analysis of substances after they have been transferred from the mobile analysis support.

10. System according to claim 1, **characterized in that** the mobile analysis support consists of a plate, the reception means being composed of pads arranged on a face of the plate and used to attach the substances to be analyzed.

11. System according to claim 1, **characterized in that** the mobile analysis support is a film (30).

12. System according to claim 11, **characterized in that** the reception means originate from capillarity forces between a surface of the film and the substances to be analyzed.

13. System according to claim 11, **characterized in that** the film (30) is free to move between an unwinder reel (37) and a winder reel (38).

14. System according to claim 11, **characterized in that** the film (30) is a uniform film, and the film surface is a hydrophilic surface.

15. System according to claim 11, **characterized in that** the film is a structured film, and the structure of the film can be used to determine the location of the reception means.

16. System according to claim 15, **characterized in that** said surface of the film is hydrophobic and supports hydrophilic pads forming said reception means.

17. System according to claim 11, **characterized in that** the film has an anisotropic thermal conductivity, the thermal conductivity through the thickness of the film being greater than the thermal conductivity in the plane of the film.

18. Process for the implementation of a biological, chemical or biochemical protocol in continuous flow on substances to be analyzed, the process using a system according to any one of the claims 1 to 17, the process comprising:
- the movement of the mobile analysis support (11, 30, 50),
- the implementation of the protocol on the substances to be analyzed during the movement of the mobile analysis support as a result of a supply of thermal energy provided by the heating means.

19. Process according to claim 18, **characterized in that** the substances to be analyzed and the reagents are brought successively to the different reception means of the support as it moves.

20. Process according to claim 18 or 19, **characterized in that** the detection means also make an analysis of substances on which the protocol was performed.

21. Process according to claim 19, **characterized in that** it takes place so as to obtain the following in sequence:
- bringing a first chemical compound in a reaction volume as far as the reception means,
- displacement of the analysis support to a first injection element,
- bringing a second chemical compound into the reaction volume by the first injection element,
- and optionally, displacement of the mobile analysis support towards a second injection element to bring a third chemical compound into the reaction volume.

22. Process according to claim 20, **characterized in that** said substances on which the protocol was performed can be analyzed directly on the mobile analysis support.

23. Process according to claim 20, **characterized in that** said substances on which the protocol was performed are analyzed after their transfer from the mobile analysis support.
